# EUROPÄISCHE PATENTSCHRIFT

(11) **EP 1 397 650 B1**
(45) Veröffentlichungstag und Bekanntmachung des Hinweises auf die Patenterteilung: **25.03.2009**
(21) Anmeldenummer: 02747405.5
(22) Anmeldetag: 18.06.2002
(51) Int. Cl.: G01J 1/42, G01K 17/00

(54) **VERFAHREN UND VORRICHTUNG ZUR DIAGNOSTIK UND ÜBERWACHUNG EINES UNFOKUSSIERTEN LASERSTRAHLES VON HOCHLEISTUNGS-LASERANLAGEN**
METHOD AND DEVICE FOR DIAGNOSING AND MONITORING AN UNFOCUSED LASER BEAM IN HIGH POWERED LASER INSTALLATIONS
PROCEDE ET DISPOSITIF POUR LE DIAGNOSTIC ET LA SURVEILLANCE D'UN FAISCEAU LASER NON FOCALISE DANS DES INSTALLATIONS LASER HAUTE PUISSANCE

(30) Priorität: 18.06.2001 DE 10129274
(43) Veröffentlichungstag der Anmeldung: 17.03.2004
(73) Patentinhaber: Prometec Gesellschaft für Produktions-, Mess- und Automatisierungstechnik mbH, 52070 Aachen (DE)
(72) Erfinder: KLUFT, Werner, Dr., 52078 Aachen (DE); STRANG, Torsten, 52156 Monschau (DE); WILBERS, Burkhard, 52064 Aachen (DE); ZIEMANN, Detlef, 52134 Herzogenrath (DE); BEERSIEK, Jörg, 52080 Aachen (DE); BÖRGER, Peter, 52134 Herzogenrath (DE); KATRYCH, Oleksiy, 52074 Aachen (DE); KATRICH, Olexandr, Dr., 310099 Kharkov (UA)
(74) Vertreter: Dallmeyer, Georg
(86) Internationale Anmeldenummer: PCT/EP2002/006719
(87) Internationale Veröffentlichungsnummer: WO 2002/103307

(56) Entgegenhaltungen:
- US-A- 4 692 623
- US-A- 4 737 643

## Beschreibung

Die Erfindung bezieht sich auf ein Verfahren und eine Vorrichtung zur Diagnostik und Überwachung eines unfokussierten Laserstrahles von Hochleistungs-Laseranlagen nach dem Oberbegriff des Anspruchs 1 bzw. des Anspruchs 8.

Aus der EP 0 409 857 ist ein Verfahren und eine Vorrichtung zur Bestimmung der Lage eines Laserstrahles bekannt, welches vier Drähte, sogenannte Drahtsensoren, benutzt, um die Lage eines Laserstrahles zu bestimmen. Jeweils zwei unter 45° zueinander verlaufende Drahtsensoren befinden sich auf je einer Gabel, die gegenüberliegend von außerhalb des Laserstrahles elektromotorisch schrittweise in Richtung der Lage der Strahlachse bewegt werden, um dann, wenn der Messwert des Widerstandes der Drähte einen Schwellwert erreicht, ausgehend von den Koordinatenachsen (X, Y), die Strahlrandtangenten zu bestimmen. Durch Bestimmung des Flächenschwerpunktes aus den von den Strahlrandtangenten umschlossenen Fläche wird die Lage der Strahlachse ermittelt. Bei diesem Verfahren ist insbesondere von Nachteil, dass Motoren zur Bestimmung der Lage eines Laserstrahles verwendet werden müssen. Damit ist dieses Verfahren aufwendig, langsam und aufgrund der bewegten Mechanik verschleißbehaftet. Ferner setzt das Verfahren zur Bestimmung der Lage eine kreisförmige Querschnittsgeometrie voraus. Es können deshalb keine beliebig positionierte, ellipsenförmige Strahlquerschnitte vermessen werden. Es kann weder die Leistung bzw. die Intensität des Strahles noch dessen Polarisation ermittelt werden.

Die US 4,692,623 "Precision Laser Beam Positioner and Spatially resolved Laser Beam Sampling Meter" zeigt eine Vorrichtung und ein Verfahren, das zur Messung der Position oder zur Bestimmung der Intensitätsverteilung von gepulsten Hochleistungs-Co2-Lasern oder von Excimer Lasern bestimmt ist. In zwei Ebenen sind mehrere in gerader Linie und planparallel angeordnete Drähte quer zum Strahlengang positioniert und die beiden Ebenen sind hinsichtlich ihrer Drahtausrichtung um 90° zueinander verdreht und in der Fläche wiederum parallel zueinander angeordnet. Jeder Drahtwiderstand ist Teil einer Weatstonschen Brücke und es wird die Differenzspannung jeweils einer Weatstonschen Brücke aufgrund der Widerstandsveränderung jeweils eines Messdrahtes gemessen. Nachteilig ist zunächst, dass das Messverfahren mit jeweils einer Weatstonschen Brücke je Messdraht sehr aufwendig ist und die drei anderen Widerstände jeder Weatstonschen Brücke aus 3 weitern Drähten bestehen müssen, die nahezu identisch konstruiert sein müssen wie die Messdrähte im Laserstrahl. Die Anzahl der erforderlichen Drähte wird somit vervierfacht. Dies stellt einen beträchtlichen Aufwand dar, denn die Drähte bestehen in der betreffenden erfindungsgemäßen Vorrichtung aus teurem Wolfram mit einem Drahtdurchmesser von ca. 25 µm (0,001 inch).

Unter der Bezeichnung "Radius Monitor" ist eine Vorrichtung zur Messung von Laserposition in x- und y-Richtung sowie von Strahldurchmesser in Form der beiden Halbachsen der Primes GmbH, Pfungstadt, bekannt. Die Vorrichtung arbeitet wie in der US 4,692,623 beschrieben mit 2 gekreuzten Drahtgittern aus jeweils ca. 30 Widerstandsdrähten aus Nickel mit 25 bzw, 50 Mikrometer Durchmesser. Die Erfassung der Stahlleistung und/oder der Stahlpolarisation ist nicht vorgesehen. Auch gibt es keine Auswertung für eine 3D-Darstellung der Intensitätsverteilung. Zwei gekreuzte Drahtgitter auf der Ober- und Unterseite einer Platine sind an Lötpunkten rund um die Durchlassöffnung für den Laserstrahl festgelötet. Die ca. 30 Drähte eines Gitters bestehen aus nur einem einzigen Draht, der vom ersten Lötstützpunkt bis zum letzten Lötstützpunkt durchgeschleift ist. Der Versorgungsstrom durch die Einzeldrähte muss deshalb vom ersten bis zum letzten Lötstützpunkt verlaufen und die thermisch beeinflusste Widerstandänderung der Einzeldrähte kann nur über den entsprechend veränderten Spannungsabfall an den einzelnen Drähten über die entsprechenden Lötpunkte der Einzeldrahtteile von jeweils einem potentialfreien Differenzspannungsmesser abgegriffen werden. Von Nachteil ist dabei neben dem hohen Aufwand für eine entsprechende Anzahl an Differenzspannungsmessern entsprechend der Anzahl an Messdrahtteilen, dass bei Zerstörung bereits eines einzigen Messdrahtteiles eines Gitters, z. B. durch Wegschmelzen aufgrund zu hoher Laserintensität, das gesamte Gitter stromlos und damit unbrauchbar wird. Die Empfehlung für den waagerechten Einbau der Drahtmessscheibe in den Laserstrahl zur Erzielung der spezifizierten Genauigkeiten zeigt, dass die Drahtmessscheibe auf eine Konvektionskühlung durch das umgebende Gas angewiesen ist, welche stets aufsteigend ist und nur quer zur Messgitterrichtung (waagerechte bzw. horizontale Lage der Drahtmessscheibe) eine schwache Kühlung der Drähte bewirkt. Bei senkrechter Anordnung der Drahtmessscheibe würde die konvektionsbedingte, von den heißen Drähten selbst erzeugte Gasströmung von unten nach oben wärmer and damit die oberen Drähte zusätzlich aufheizen, was zu Ungenauigkeiten bzw. Verzerrungen des Laserstrahlquerschnittsbildes führen muss. Eine fremderzeugte Luftströmung, welche deutlich größer als die natürliche Konvektion ist und diese damit praktisch vernachlässigen lässt, ist weder quer noch längs zu den Drahtgittern in der Vorrichtung vorgesehen. Demnach kann sie auch nicht die Vorteile aufweisen, die eine fremderzeugte größere Gasströmung hinsichtlich Messgenauigkeit und höherer messbarer Strahlleistung und Strahlintensität mit sich bringt.

Unter der Bezeichnung "Polarization Monitor" ist eine Vorrichtung zur Messung der Polarisation von Laserstrahlung mittels eines sich drehenden Drahtgitters der Primes GmbH, Pfungstadt, bekannt. Das erzeugte Ausgangssignal zur Bestimmung von Polarisationsrichtung und Polarisationsgrad basiert auf der Tatsache, dass die Absorption an einer runden Drahtoberfläche abhängig ist von der Orientierung der Polarisationsrichtung zum Draht. Es erfolgt die Erfassung der Messsignale ebenfalls aufwendig mit vielen Differenzspannungsmessern und damit mit denselben Nachteilen wie beim weiter oben beschriebenen "Radius Monitor" derselben Firma. Auch bestehen dieselben Nachteile bzgl. der Konvektionskühlung weshalb das Gerät nur in horizontaler Position des Drahtgitters betrieben werden soll. Ferner ist beim "Polarization Monitor" von Nachteil, dass dieser ein drehendes Drahtgitter aufweist, wodurch Aufwendungen zur Signalübertragung vom drehenden Drahtgitterteil auf die Gehäuseplattform erforderlich sind und die erforderliche Mechanik dem Verschleiß unterliegt. Weiterer erheblicher Nachteil ist die lange Messdauer bzw. die schlechte Wiederholhäufgkeit von Messdaten, denn für eine komplette Messwertaufnahme ist ein Drehwinkel des Drahtgitters von mindestens 180° zu durchfahren, wobei der "Polarization Monitor" größenordnungsmäßig eine Sekunde benötigt.

Aufgabe der Diagnostik und Überwachung ist es, unter Einsatz von Drahtgittern im Laserstrahl unter Messung der Temperaturveränderung der Drähte des Drahtgitters durch die Absorption des in z-Richtung verlaufenden Laserstrahles an den Drähten die wesentlichen Laserstrahlkenngrößen, wie Strahllage in x und y-Richtung, Strahlradius, Strahldurchmesser bzw. die Ellipsenhalbachsen in x und y-Richtung des Strahles, Strahlleistung und Strahlpolarisation etc. während der Materialbearbeitung durch den Laserstrahl, also In-Process zu erfassen und zwar erfindungsgemäß so, dass sehr hohe Laserstrahlleistungen bzw. Intensitäten mit dem an sich bekannten bolometrischen Verfahren sicher erfasst werden können ohne die Drähte des Drahtgitters zu zerstören. Ferner ist es Aufgabe der Erfindung, dass mindestens die o.g. Messgrößen gleichzeitig mit einem Gerät erfasst werden können und dass dieses auch für die Messung der Polarisation weitestgehend ohne bewegte Teile auskommt, um einen sicheren Dauereinsatz zu gewährleisten.

Weiterhin soll die Intensitätsverteilung über dem Strahlquerschnitt während der Materialbearbeitung erfasst und auf einem Bildschirm wiedergegeben werden. Die erzielte Bildrate soll, für das menschliche Auge ein weitgehend ruckfreies Bild ergeben. So sind relativ schnelle Veränderungen in der Intensitätsverteilung beobachtbar.

Zur Lösung der Aufgabe dienen die Merkmale der Ansprüche 1 bzw. 4.

Die Vorteile der Erfindung ergeben sich zunächst aufgrund der Gasströmung (GS bzw. LS) gegen die Drahtgitterebenen (DG 1 bis DGn), wodurch diese eine deutliche Kühlung erhalten, und somit höhere Laserstrahlintensitäten vermessen werden können.

Damit die querorientierte Gasströmung (GS) nicht aufgrund von Konvektionsströmung über dem Strömungsweg aufsteigt und damit die unteren Drahtgitterebenen teilweise ungenügend kühlt werden, ist vorgesehen, dass die Strömungsgeschwindigkeit des Gasstromes (GS) deutlich größer ist als die Konvektionsströmung ist. Damit werden vorteilhafterweise auch beliebige Einbaulagen (vertikal und horizontal) der Messvorrichtungen möglich.

Die Gasströmung quer statt längs zur Laserstrahlrichtung (LA) anzuordnen, bringt weiterhin den Vorteil, dass in Querrichtung die Kompensationsdrähte D1 und Dn und die Strömungsgitter SG, SG1 und SG2 angeordnet werden können, deren Anordnung in Längsrichtung zum Laserstrahl aufgrund des Vorhandenseins des Laserstrahles selbst nicht möglich ist. Die Strömungsgitter erzeugen eine Gasströmung mit homogenisierten Turbolenzen, welche die Kühlleistung der Widerstandsdrähte nochmals deutlich verbessert. Ferner bewirkt die Gasströmung mit homogenisierten Turbolenzen aufgrund der Strömungsgitter eine sehr gleichmäßige Kühlung der Widerstandsdrähte, welches sich messgenauigkeitssteigernd auswirkt.

Ein weiteres Mittel zur Steigerung der Messgenauigkeit und der maximal messbaren Laserstrahlintensitäten ist die Verwendung von sehr dünnen Drähten unterhalb von 15 Mikrometer und die Wahl von Platin als Drahtwerkstoff, der nur minimalste physikalische Veränderungen mit der Zeit zeigt wie z.B. Oxidation und damit dauerhaft gleichbleibende Messeigenschaften sowie einen sehr linearen Temperaturkoeffizienten aufweist.

Wesentlich für die dauerhafte Messqualität und die Vermeidung der Zerstörung der dünnen Drähte ist, dass die Drähte nicht Schmutzablagerungen wie Staub ausgesetzt werden, die bei Verbrennung im Laserstrahl auf einem Draht aufgrund der freigesetzten Energie beim Verdampfen des Schmutzes bzw. Staubes diesen zum Schmelzen bringen können. Deshalb sieht die Erfindung eine offene Ausführungsform in einem Gehäuse (OHG) gemäß den Ansprüchen 4 bis 6 vor, bei der die Schmutzablagerungen aus der Raumluft durch eine Luftnebenströmung (LNS) ferngehalten werden und eine weitere, geschlossene Ausführung in einem Gehäuse (GGH) gemäß den Ansprüchen 8 bis 12 vor, welche das saubere Gas des geschlossenen Strahlführungsrohrsystems als Gasstrom (GS) zur Kühlung der Drahtgitterebenen benutzt.

Naturgemäß heizt sich der quergeströmte Gasstrom (GS) entlang der Drähte D1 bis Dn auf, wodurch die in Strömungsrichtung hinten liegenden Widerstandsdrähte durch den wärmeren Gasstrom zusätzlich aufgeheizt werden. Dieses Problem wird erfindungsgemäß nach den Ansprüchen 15 bis 16 so gelöst, das die beiden Kompensationsdrähte jeder Drahtgitterebene DG1 bis DGn dieses kompensieren und damit zur Messgenauigkeitssteigerung beitragen.

Ein Anstellwinkel (AW) der Widerstandsdrähte von 0° kühlt den Draht nur ungenügend, weshalb erfindungsgemäß für zwei bis sechs Drahtgitterebenen DG1 bis DGn eine gleichmäßig verteilte Winkelanordnung gemäß den Ansprüchen 17 bis 18 geschaffen wurde, die für den quergestellten Gasstrom ein Optimum zur Drahtkühlung darstellt und einen kritischen Anstellwinkel zwischen den Widerstandsdrähten und dem Gasstrom (GS) zwischen - 15° und +15° vermeidet.

Die Ansprüche 19 bis 24 beschreiben die elektrische Auswertung der Widerstandsdrähte D1 bis Dn der Drahtgitterebenen DG1 bis DGn, die sich insbesondere dadurch auszeichnet, dass gegenüber dem Stand der Technik deutlich weniger Bauteile benutzt werden und dass bei dem Bruch eines Widerstandsdrahtes die restlichen Widerstandsdrähte weiterhin zur Messung benutzt werden können und somit die Messvorrichtung nicht ausfällt. Ferner kann der Messwert des ausgefallenen Widerstandsdrahtes über die anderen Widerstandsdrähte interpoliert werden.

Ferner ist gemäß den Ansprüchen 19 bis 24 vorgesehen, dass gegenüber dem Stand der Technik bereits bei Einsatz von zwei Drahtgitterebenen auch die Laserstrahlleistung bei Verwendung entsprechender Kalibrierfaktoren gemessen werden kann und dass auch die Laserstrahlkenngröße Polarisationskontrast bereits mit nur zwei Drahtgitterebenen erfassbar ist.

Erfindungsgemäß ist bei Einsatz von sechs Drahtgitterebenen DG1 bis DGn vorgesehen, die Kenngrößen der Polarisation der Laserstrahlung zu messen, wobei gegenüber dem Stand der Technik und mit Ausnahme des Ventilators (VE) keine mechanisch bewegten und damit verschleißbehaftete Komponenten notwendig sind. Ferner verfügt die erfindungsgemäße Vorrichtung über eine deutlich bessere Abtastrate für die Messwerte nämlich von nur 60 Millisekunden anstatt ca. einer ganzen Sekunde bei der Vorrichtung gemäß dem Stand der Technik.

Ferner ist vorteilhafterweise gemäß Anspruch 29 bei Einsatz von sechs Drahtgitterebenen DG1 bis DGn vorgesehen, die Intensitätsverteilung über dem Strahlquerschnitt während der Materialbearbeitung zu erfassen und zwar in einer Bildrate von mindestens 8 Bildern je Sekunde, das für das menschliche Auge ein weitgehend ruckfreies Bild ergibt. Durch die Schaltanordnung und den Einsatz schneller Bauteile und Software gelingt es mit der Erfindung, die gesamten Messdaten aus den sechs Drahtgitterebenen in nur 60 Millisekunden auszulesen und zu verarbeiten.

Ferner sieht die Erfindung gemäß den Ansprüchen 27 und 30 vorteilhafterweise eine Überwachung der Kenngrößen des Laserstrahles vor, um die Laserstrahlqualität "In-Frozess" überwachen zu können, was aus dem Stand der Technik nicht bekannt ist.

Außerdem sind gemäß den Ansprüchen 31 bis 35 ein Temperatursensor und ein Strömungsgeschwindigkeitssensor für den Gasstrom (GS) vorgesehen. Während der Temperatursensor zur weiteren Genauigkeitssteigerung der temperaturbeeinflussten Messgrößen dient, ist der Strömungsgeschwindigkeitssensor zu Sicherheitszwecken vorgesehen und stellt über eine Regelung des Ventilators (VE) eine ordnungsgemäße, gleichbleibende Kühlung der Drahtgitterebenen sicher und bewirkt ferner im Falle von dennoch zu großen Abweichungen von der Sollströmungsgeschwindigkeit (z.B. durch Fressen des Lüfters) eine Abschaltung des Laserstrahles, welches verhindert, dass bei mangelnder Strömungsgeschwindigkeit die Widerstandsdrähte durchbrennen. Am Besten und am Billigsten bestehen beide Sensoren erfindungsgemäß aus einem einzigen, weiteren Widerstandsdraht mit einer Anschaltung über zwei weitere Schalter des Multiplexers. Der weitere Widerstandsdraht ist in Strömungsrichtung unmittelbar vor den Drahtgitterebenen DG1 bis DGn positioniert, um dort die ordnungsgemäße Strömung sicherzustellen, wo sie sichergestellt werden muss.

Nachfolgend wird die Erfindung anhand einer bevorzugten Ausführungsform unter Bezugnahme auf die anliegenden Zeichnungen näher erläutert.

Es zeigen:
- Fig. 1a: eine Messvorrichtung in einem offenen, transportablen Gehäuse,
- Fig. 1b: einen Schnitt durch die Messvorrichtung gemäß Fig. 1a,
- Fig. 2a: eine Messvorrichtung in einem geschlossenen, im Strahlführungsrohr installierten Gehäuse,
- Fig. 2b: einen orthogonalen Schnitt durch die Messvorrichtung gemäß Fig. 2a,
- Fig. 3: eine Messvorrichtung in einem geschlossenen, im Strahlführungsrohr installierten Gehäuse mit metallischen Rohr-oder Schlauchsystem zur Kühlung des Gasstromes,
- Fig. 4: eine Drahtgitterebene D1 bis Dn mit Kompensationsdrähten und Anstellwinkel W zur Gas- oder Luftstromrichtung,
- Fig.5: ein Funktionsprinzip der Kompensationsdrähte über lineare Interpolation bei Kühlung der Drahtgitterebenen durch Querstömung,
- Fig. 6: eine Lage der Drahtgitterrichtungen zum Gasstrom (GS) und Anstellwinkel (AW),
- Fig. 7: eine elektronische Anordnung zur Auswertung der Drähte D1 bis Dn der Drahtgitter DG 1 bis DGn und
- Fig.8: ein Funktionsprinzip der Kompensationsdrähte über lineare Interpolation bei Kühlung der Drahtgitterebenen durch Längsströmung.

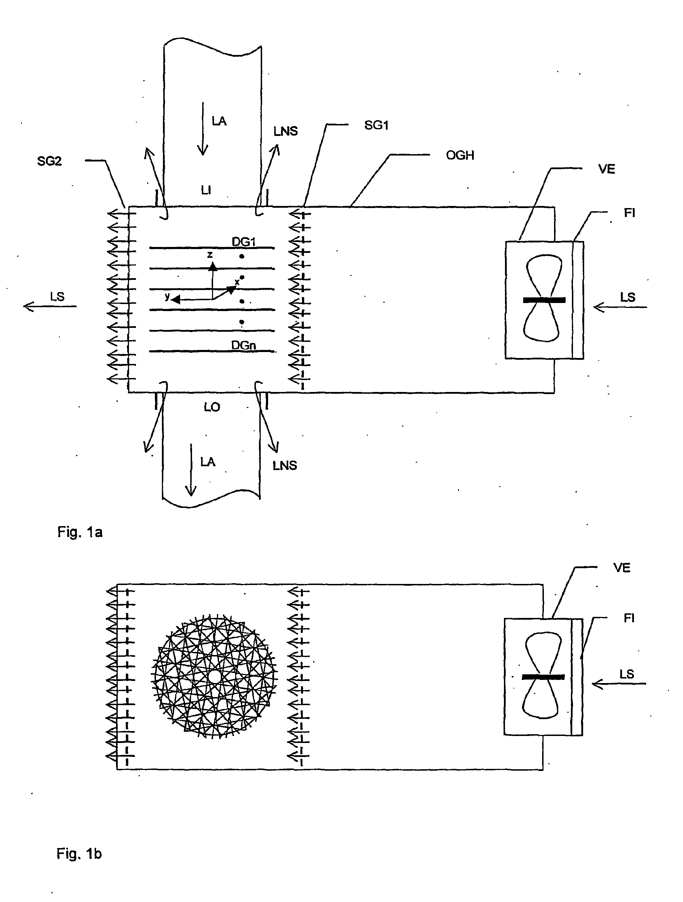

Die Figuren 1a und 1b zeigen eine Messvorrichtung in einem offenen, transportablen Gehäuse (OGH). Der Laserstrahl (LA) tritt durch die Öffnung LI hinein, durchquert die einzelnen Drahtgitterebenen (DG1 bis DGn), von denen hier schematisch sechs Stück dargestellt sind, und verlässt das Gehäuse durch die Öffnung LO. Ein Ventilator (VE) erzeugt einen durch einen Filter (FI) von Partikeln gereinigten Luftstrom (LS) welcher durch das erste Strömungsgitter (SG1) gleichmäßig auf die Drahtgitterebenen (DG1 bis DGn) geleitet wird. Das zweite Strömungsgitter (SG2) sorgt für einen erhöhten Austrittswiderstand, wodurch ein sehr kleiner Teil der Strömung das Gerät in einer Luftnebenströmung durch die Öffnungen LI und LO verlässt. Fig. 1a zeigt die Seitenansicht und Fig. 1b die Draufsicht auf das Gerät, wobei in Fig. 1b die einzelnen Messdrähte der Drahtgitterebenen im Laserstrahlquerschnitt zu erkennen sind. Weiterhin ist in Fig. 1a ein Koordinatensystem eingezeichnet, auf welches sich die ermittelten Messwerte beziehen.

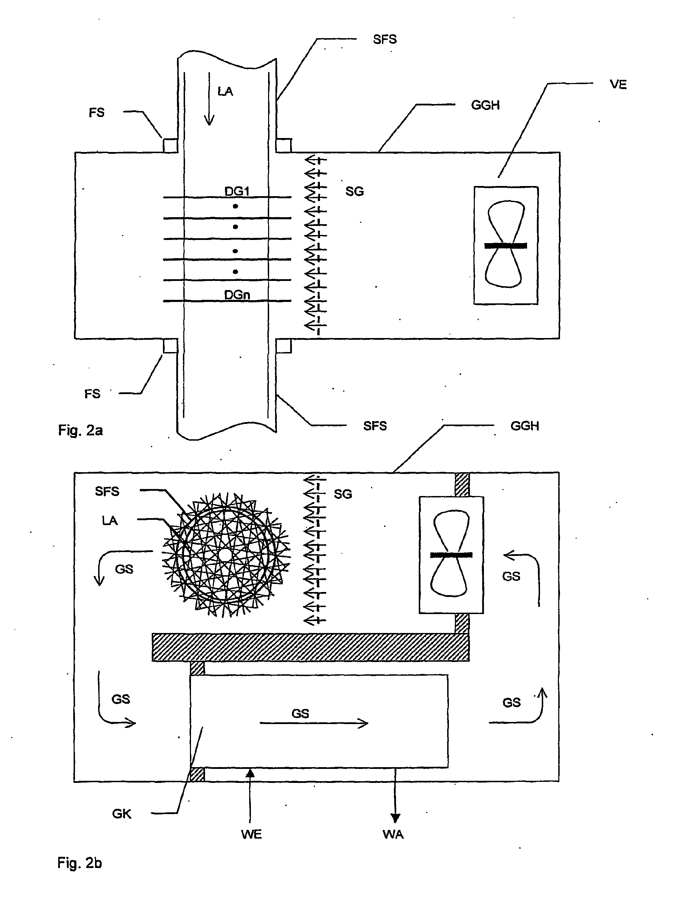

Die Figuren 2a und 2b zeigen eine Messvorrichtung in einem geschlossenen, im Strahlführungsrohr installierten Gehäuse (GGH). Hier wird das saubere Gas des Strahlführungssystems (SFS) zur Kühlung der Messdrähte intern im Gehäuse umgewälzt. Der entstehende Gasstrom (GS) wird mittels eines Gaskühlers (GK) welcher über Kühlwassereinlass (WE) und Auslass (WA) verfügt, gekühlt. Über zwei Flansche wird das Gehäuse mit dem Strahlführungssystem verbunden. Fig. 2a zeigt die Seitenansicht und Fig. 2b die Draufsicht auf das Gerät.

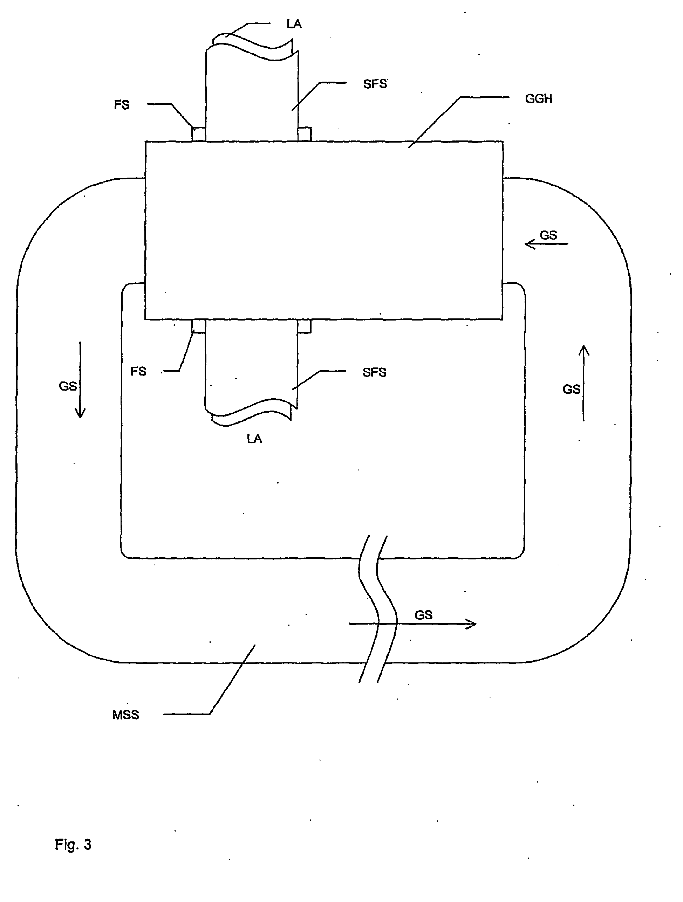

Figur 3 zeigt eine Messvorrichtung in einem geschlossenen, im Strahlführungsrohr installierten Gehäuse mit metallischen Rohr- oder Schlauchsystem zur Kühlung des Gasstromes. Hier wird gegenüber der in Fig. 2 gezeigten Vorrichtung der Gasstrom (GS) nicht intern im Gerät, sondern durch einen flexiblen metallischen Schlauch (MSS) umgewälzt und über diesen Schlauch auch gekühlt.

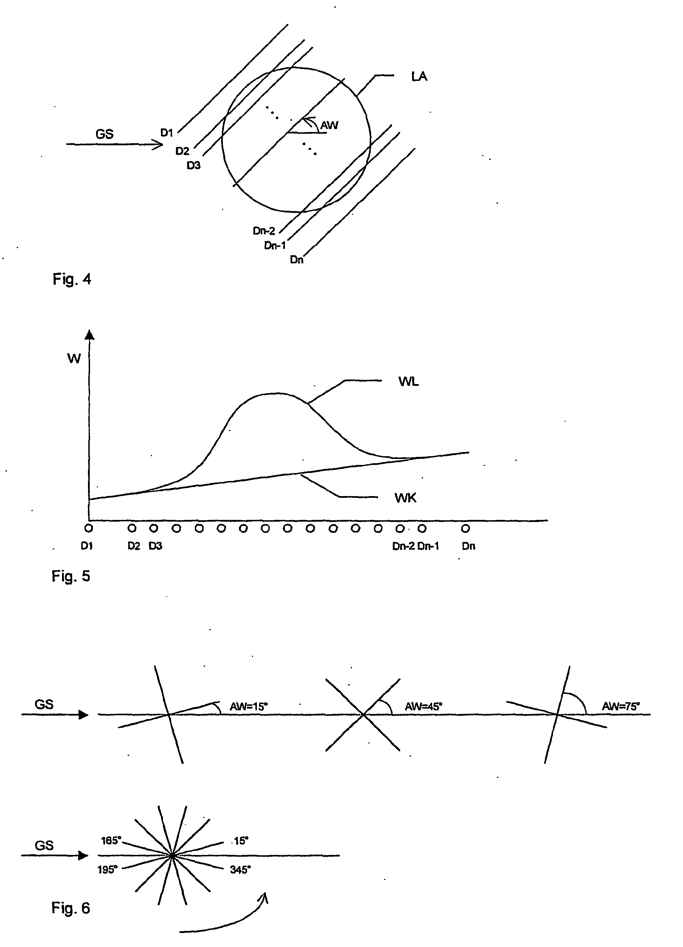

Figur 4 zeigt eine Drahtgitterebene mit den Messdrähten D2 bis Dn-1 und den Kompensationsdrähten D1 und Dn sowie dem Anstellwinkel AW zur Gas- oder Luftstromrichtung (GS) im Laserstrahl (LA).

Das Funktionsprinzip der Kompensationsdrähte über lineare Interpolation bei Kühlung der Drahtgitterebenen durch Querströmung ist in Figur 5 gezeigt, wobei die einzelnen Drähte (D1 bis Dn) auf der Abszisse und deren Widerstandswerte auf der Ordinate dargestellt sind. WL sind hierbei die Messwerte und WK die zu kompensierenden Werte. Der Kompensationswert wird für jeden Draht durch lineare Interpolation aus den Messwerten der Kompensationsdrähte D1 und Dn ermittelt.

Figur 6 zeigt die Lage der Drahtgitterrichtungen zum Gasstrom (GS) und Anstellwinkel (AW). Hier ist exemplarisch der Anstellwinkel der drei Drahtgitterpaare eines mit sechs Drahtgitterebenen ausgerüsteten Gerätes dargestellt.

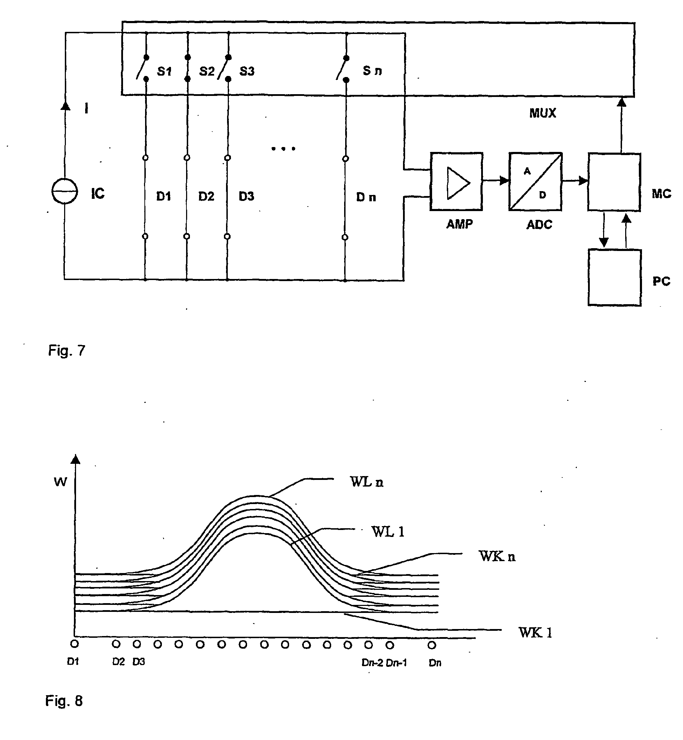

Figur 7 zeigt eine elektronische Anordnung zur Auswertung der Drähte (D1 bis Dn) der Drahtgitter (DG 1 bis DGn). Die einzelnen Drähte (D1 bis Dn) aller Drahtgitterebenen (DG 1 bis DGn) werden einzeln nacheinander über Analogschalter S1 bis Sn eines Multiplexers (MUX) mit Strom aus der Konstantstromquelle (IC). Der dem Widerstand eines Drahtes proportionale Spannungsabfall wird über den Verstärker (AMP) verstärkt und mittels des Analog- Digital- Wandlers (ADC) vom Mikrocontroller (MC) erfasst. Der Mikrokontroller steuert seinerseits den Multiplexer und kann die ermittelten Werte an einen Auswerterechner (PC) übertragen.

Figur 8 zeigt das Funktionsprinzip der Kompensationsdrähte über lineare Interpolation bei Kühlung der Drahtgitterebenen durch Längsströmung. Zu jeder Drahtgitterebene sind hier die einzelnen Messwerte (WL1 bis WLn) und die zu kompensierenden Werte (WK1 bis WKn) der jeweiligen Drähte dargestellt.

## Patentansprüche

1. Verfahren zur Messung von Kenngrößen eines in z-Richtung verlaufenden Laserstrahles (LA) wie Strahllage in x und y-Richtung, Strahlradius, Strahldurchmesser bzw. die Ellipsenhalbachsen in x und y-Richtung des Strahles, Strahlleistung, Strahlpolarisation über mindestens zwei hintereinander im Strahlengang des Lasers angeordnete und zueinander verdrehte Drahtgitterebenen (DG1 bis DGn) mit jeweils in ihren Gitterebenen nebeneinander und quer zum Strahlengang angeordneten Drähten (D1 bis Dn), die einen kleinen Teil der Laserstrahlung absorbieren und damit ihren elektrischen Widerstand erhöhen, wobei aus der Widerstanderhöhung der Drähte der Gitterebenen die Kenngrößen des Laserstrahles berechnet werden, diese also zu Messgitterebenen (DG1 bis DGn) werden, **dadurch gekennzeichnet, dass** die Messgitter durch einen Gasstrom (GS) angeströmt und damit gekühlt werden, wobei das Gas die Messgitter quer zur Laserstrahlrichtung bzw. parallel zu den Drahtgitterebenen (DG 1 bis DGn) durchströmt.

2. Verfahren nach Anspruch 1, **dadurch gekennzeichnet, dass** die Strömungsgeschwindigkeit des Gasstromes (GS) deutlich größer ist als die Strömungsgeschwindigkeit der aufsteigenden Konvektionsströmung, die aufgrund der heißen Drähte ohne Querströmung entstehen würde.

3. Verfahren nach Anspruch 1 oder 2, **dadurch gekennzeichnet, dass** das Gas aus der Raumluft bestehen kann und in diesem Falle der Gasstrom (GS) ein Luftstrom (LS) ist.

4. Vorrichtung zur Durchführung der Verfahren nach den Ansprüchen 1 bis 3, umfassend eine Messvorrichtung in der sich die Messgitter (DG1 bis DGn) befinden und die aus einem offenen, transportablen Gehäuse (OGH) besteht, durch das der Laserstrahl (LA) über zwei Öffnungen (LI und LO) durchtritt und dabei die Messgitter quer zu den Messgitterebenen (DG1 bis DGn) passiert, und einer Ventilator (VE), der die Raumluft ansaugt und einen Luftstrom (LS) parallel zu den Messgitterebenen durch das offene Gehäuse (OGH) der Messvorrichtung und damit auch durch die Messgitter bläst.

5. Vorrichtung gemäß Anspruch 4, **dadurch gekennzeichnet, dass** in Gasströmungsrichtung vor dem Ventilator ein Gas- bzw. Luftfilter (FI) angeordnet ist.

6. Vorrichtung gemäß Anspruch 4 oder 5, **dadurch gekennzeichnet, dass** in Luftströmungsrichtung vor den Drahtgitterebenen ein Strömungsgitter (SG1) angeordnet ist, das so ausgelegt ist, dass in Luftströmungsrichtung (LS) vor diesem Strömungsgitter ein über die Fläche des Strömungsgitters gleichmäßig verteilter Staudruck entsteht, wodurch über die Vielzahl der identischen Öffnungen in dem Strömungsgitter die Luft hinter dem Strömungsgitter über die gesamte Fläche des Strömungsgitters mit einer gemittelten, identischen Strömungsgeschwindigkeit das Strömungsgitter in Richtung Messgitterebenen verlässt und damit eine Luftströmung mit homogenisierten Turbolenzen zur maximalen Kühlung an den Drahtgitterebenen entsteht.

7. Vorrichtung gemäß den Ansprüchen 4 bis 6, **dadurch gekennzeichnet, dass** sich in Luftströmungsrichtung hinter den Draht- bzw. Messgitterebenen (DG1 bis DGn) ein weiteres Strömungsgitter (SG2) befindet, das so ausgelegt ist, dass in Strömungsrichtung vor diesem Strömungsgitter ein sehr kleiner Staudruck entsteht, wodurch ein sehr kleiner Teil der Luftströmung als Luftnebenströmung (LNS) aus den beiden Öffnungen (LI und LO) durch die der Laserstrahl verläuft austritt, um Schwebstoffe in der Luft außerhalb des Gehäuses (OGH) wie Staub etc. von den Messgittern fernzuhalten.

8. Vorrichtung zur Durchführung der Verfahren nach den Ansprüchen 1 oder 2, umfassend eine Messvorrichtung, in der sich die Messgitter (DG1 bis DGn) befinden, und die aus einem geschlossenen, im Strahlführungssystem bzw. -rohr installierten Gehäuse (GGH) besteht, das mit dem Strahlführungssystem- bzw. - rohr (SFS) über Flansche (FS) oder andere Verbindungselemente fest verbunden ist und durch die der Laserstrahl (LA) durchtritt und dabei die Messgitter quer zu den Messgitterebenen (DG1 bis DGn) passiert, und einen Ventilator (VE), der das Gas des Strahlführungssystems bzw. -rohres (SFS) innerhalb des geschlossenen Gehäuses (GGH) der Messvorrichtung als Gasstrom (GS) umwälzt und dabei parallel zu den Messgitterebenen durch das geschlossene Gehäuse (GGH) der Messvorrichtung und damit auch durch die Messgitter bläst.

9. Vorrichtung nach Anspruch 8, **dadurch gekennzeichnet, dass** sich in Luftströmungsrichtung vor den Drahtgitterebenen ein Strömungsgitter (SG) befindet, dass so ausgelegt ist, dass in Gasströmungsrichtung (GS) vor diesem Strömungsgitter ein über die Fläche des Strömungsgitters gleichmäßig verteilter Staudruck entsteht, wodurch über die Vielzahl der identischen Öffnungen in dem Strömungsgitter das Gas nach dem Strömungsgitter über der gesamten Fläche des Strömungsgitters mit einer gemittelten, identischen Strömungsgeschwindigkeit das Strömungsgitter in Richtung Messgitterebenen verlässt und damit eine Luftströmung mit homogenisierten Turbolenzen zur maximalen Kühlung an den Drahtgitterebenen entstehet.

10. Vorrichtung nach einem der Ansprüche 4 bis 9, **dadurch gekennzeichnet, dass** die Messgitter axial zur Laserstrahlrichtung bzw. senkrecht zu den Drahtgitterebenen (DG1 bis DGn) angeströmt werden.

11. Vorrichtung nach einem der Ansprüche 7 bis 10, **dadurch gekennzeichnet, dass** sich in dem geschlossenen Gehäuse (GGH) der Messvorrichtung im Gasstrom (GS) ein Gaskühler (GK) befindet, der den im Bereich der Messgitter (DG1 bis DGn) erwärmten Gasstrom (GS) abkühlt und selbst vorzugsweise durch Kühlwasser gekühlt wird.

12. Vorrichtung gemäß Anspruch 11, **dadurch gekennzeichnet, dass** der Gaskühler (GK) ein Peltier-Element ist.

13. Vorrichtung nach einem der Ansprüche 8 oder 9, **dadurch gekennzeichnet, dass** der Gasstrom (GS) aus dem geschlossenen Gehäuse (GGH) der Messvorrichtung heraus in ein metallisches Rohr- oder Schlauchsystem (MSS) und von dort zurück in das geschlossene Gehäuse (GGH) der Messvorrichtung geführt wird, und dass das metallische Rohr- oder Schlauchsystem (MSS) eine genügende Metalloberflächengröße, sich ergebend aus Durchmesser und Länge aufweist, um den Gasstrom (GS) in genügendem Maße zu kühlen.

14. Vorrichtung nach den Ansprüchen 8 bis 13, **dadurch gekennzeichnet, dass** das geschlossene Gehäuse (GGH) mit den die Messvorrichtung bestimmenden Elementen, mindestens jedoch mit den Messgittern (DG1 bis DGn) und dem geschlossenen Gasstrom (GS) so weit verkleinert ist, dass die Messvorrichtung in die im allgemeinen bekannten Kassettentaschen zur Aufnahme von Linsen in Laserschneidköpfen und anstelle einer solchen passt, und so ein geschlossenes System mit dem Strahlführungssystem bestimmungsgemäß bildet, und dass bei einer solchen Vorrichtung die Kühlung des Gasstromes (GS) von denen um die Messgitter (DG1 bis DGn) herum befindlichen, innenliegenden, wassergekühlten Laserschneidkopfmetalloberflächen im Bereich der Kassettentasche oder bzw. und von einem zusätzlichen Gaskühler übernommen wird.

15. Vorrichtung nach den Ansprüchen 4 bis 14, **dadurch gekennzeichnet, dass** jede der Drahtgitterebenen (DG1 bis DGn) aus temperaturabhängigen, parallel zueinander in einer Ebene befindlichen identischen Widerstandsdrähten (D1 bis Dn) besteht, und dass die Drahtgitterebenen so im Laserstrahl (LA) positioniert sind, dass sich nur die Widerstands-Drähte D2 bis D(n-1) im Laserstrahl befinden können und die beiden äußeren Widerstandsdrähte D1 und Dn sich nicht im Laserstrahl befinden, sondern vom Gehäuse GGH bzw. OGH oder vom Strahlführungssystem (SFS) abgeschattet sind, und als Kompensationsdrähte verwendet werden sowie zu ihren benachbarten Widerstandsdrähten D2 bzw. D(n-1) mindestens den doppelten Abstand haben als die anderen Widerstands-Drähte untereinander.

16. Vorrichtung gemäß Anspruch 14, **dadurch gekennzeichnet, dass** die beiden Kompensationsdrähte D1 und Dn zur Korrektur des Temperaturgefälles des Luftstromes (LS), der sich entlang der Widerstandsdrähte D2 bis D(n-1) bzw. der Drahtgitterebene aufheizt, benutzt werden, und dass als Korrekturverfahren z. B. die Widerstandsdifferenz der beiden Kompensationsdrähte D1 und D(n) über den anderen Widerstandsdrähten durch eine Gerade linear interpoliert wird und die interpolierten Einzelwerte als Korrekturwerte (WK) von den Messwerten (WL) der Widerstandsdrähte D2 bis D(n-1) zu deren Temperaturkompensation abgezogen werden.

17. Vorrichtung nach den Ansprüchen 4 bis 16, **dadurch gekennzeichnet, dass** mindestens ein Drahtgitterpaar jeweils mit Kompensationsdrähten existiert, wobei die Drahtrichtungen der beiden einzelnen Drahtgitterebenen des Drahtgitterpaares untereinander immer in einem Winkel von 90° zueinander stehen und dass die Drahtrichtung des einen der beiden einzelnen Drahtgitterebenen zum Gasstrom (GS) einen Anstellwinkel (AW) von 45° hat, womit das andere Drahtgitter den Winkel 135° zum Gasstrom (GS) erhält und somit beide Drahtgitterebenen gleichermaßen angeströmt werden.

18. Vorrichtung nach Anspruch 17, **dadurch gekennzeichnet, dass** ein weiteres Drahtgitterpaar mit einem Anstellwinkel (AW) von 15° und noch eines mit einem Anstellwinkel (AW) von 75° existieren können, so dass winkelbezogen drei gleichmäßig verteilte Drahtgitterpaare bzw. sechs gleichmäßig verteilte Drahtgitterebenen entstehen und alle Drahtrichtungen weitgehend quer zum Gasstrom (GS) stehen bzw. der kritische Bereich, wo die Drahtrichtungen fast parallel zum Gasstrom (GS) verlaufen würden (>165° bis <195° bzw. >345° bis <15°) und damit kaum eine Kühlung erhielten, vermieden wird.

19. Vorrichtung nach den Ansprüchen 4 bis 18, **dadurch gekennzeichnet, dass** die Widerstandsdrähte D1 bis Dn in den Drahtmessgitterebenen DG1 bis DGn aus nicht oxidierendem, hochtemperaturfestem und im elektrischen Widerstand linear von der Temperatur abhängenden Material, vorrangig aus Platin bestehen.

20. Vorrichtung nach Anspruch 19, **dadurch gekennzeichnet, dass** die Widerstandsdrähte D1 bis Dn in den Drahtmessgitterebenen DG1 bis DGn einen Durchmesser von weniger als 15 Mikrometer haben.

21. Vorrichtung nach den Ansprüchen 4 bis 20, **dadurch gekennzeichnet, dass** die Widerstandsdrähte D1 bis Dn in jeder der Drahtmessgitterebenen DG1 bis DGn einzelne Drähte sind, die alle einzeln und nacheinander über Analogschalter S1 bis Sn in jeder der Drahtmessgitterebenen DG1 bis DGn einen Multiplexer (MUX) bilden der die Analogschalter nacheinander mit Strom aus einer einzigen Konstantstromquelle (IC) kurzzeitig beaufschlagt und währenddessen der aufgrund des temperaturabhängigen Widerstandes des einzelnen Drahtes entstehende Spannungsabfall von einem einzigen Verstärker (AMP) erfasst wird und über einen einzigen Analog-Digital-Wandler (ADC) von einem Mikrocontroller (MC) aufgenommen wird, der seinerseits den Multiplexer (MUX) zur Ansteuerung der Analogschalter (S1 bis Sn) steuert und somit die Widerstandswerte als proportionale Spannungsabfall-Messwerte der einzelnen Drähte D1 bis Dn in jeder der Drahtmessgitterebenen DG1 bis DGn erfasst.

22. Vorrichtung nach Anspruch 21, **dadurch gekennzeichnet, dass** schnelle elektronische Bauelemente der genannten Art und schnelle Software für die Auswertung im Mikrocontroller (MC) benutzt wird, die es ermöglichen, die Spannungsabfall-Messwerte aller Widerstandsdrähte D1 bis Dn in allen Drahtgitterebenen DG1 bis DGn in insgesamt weniger als 10 Millisekunden je Drahtgitterebene zu erfassen und gleichzeitig daraus mindestens die Kenngrößen des Laserstrahles, die Strahllage in x und y-Richtung, den Strahlradius bzw. -Durchmesser bzw. die Ellipsenhalbachsen in x und y-Richtung des Strahles zu berechnen.

23. Vorrichtung nach Anspruch 22, **dadurch gekennzeichnet, dass** eine entsprechende Messvorrichtung bezüglich einer zu messenden Strahlleistung Kalibrierfaktoren aufweist und somit in der Lage ist, die Strahlleistung allein oder zusätzlich zu den bereits erfassten Kenngrößen des Laserstrahles zu berechnen.

24. Vorrichtung nach den Ansprüchen 22 oder 23, **dadurch gekennzeichnet, dass** eine entsprechende Messvorrichtung die angegebenen Strahlkenngrößen bereits mit nur zwei Drahtgitterebenen bzw. einem Drahtgitterpaar mit ausreichender Genauigkeit erfasst.

25. Vorrichtung nach den Ansprüchen 22 bis 23, **dadurch gekennzeichnet, dass** eine entsprechende Messvorrichtung bereits mit nur zwei Drahtgitterebenen bzw. einem Drahtgitterpaar die Laserstrahlkenngröße Polarisationskontrast allein oder zusätzlich zu den bereits erfassten Kenngrößen des Laserstrahles berechnet.

26. Vorrichtung nach den Ansprüchen 4 bis 23, **dadurch gekennzeichnet, dass** eine entsprechende Messvorrichtung mit sechs Drahtgitterebenen DG1 bis DG 6 bzw. drei Drahtgitterpaaren zusätzlich die Laserstrahlkenngrößen Polarisationselliptizität und Azimuth in x- und y-Richtung des Strahles erfasst und dass diese Messung auch innerhalb der Gesamtzykluszeit der Vorrichtung von weniger als 60 Millisekunden (6 x 10 Millisekunden je Drahtgitter) erfolgt.

27. Vorrichtung nach den Ansprüchen 22 bis 26, **dadurch gekennzeichnet, dass** eine entsprechende Messvorrichtung für mindestens eine der messbaren Kenngrößen des Laserstrahles über mindestens eine einstellbare Schaltschwelle zur Überwachung mindestens einer Strahlkenngröße verfügt, und dass die eventuellen Schaltausgangssignale an die Steuerung der Laserstrahlanlage zu Abschalt- oder Regelzwecken weitergeleitet werden können.

28. Vorrichtung nach den Ansprüchen 4 bis 27, **dadurch gekennzeichnet, dass** eine entsprechende Messvorrichtung zusätzlich über einen Personal Computer (PC) verfügen kann, über den die Messvorrichtung parametriert, kalibriert oder bedient werden kann und der auch dazu benutzt werden kann, die Messwerte auszulesen, abzuspeichern oder weiter zu verarbeiten.

29. Vorrichtung nach den Ansprüchen 22 bis 28, **dadurch gekennzeichnet, dass** eine entsprechende Messvorrichtung zusätzlich über einen Personal Computer (PC) verfügt, der die Messrohdaten von sechs Drahtgitterebenen DR1 bis DR6 neben den Berechnungen von Kenngrößen des Laserstrahles in der Messvorrichtung ausliest und eine Darstellung der Intensitätsverteilung auf dem Bildschirm des PC so schnell berechnet, dass diese mindestens mit einer Bildwiederholrate von 8 Hz dargestellt wird.

30. Vorrichtung nach Anspruch 29, **dadurch gekennzeichnet, dass** aus der Intensitätsverteilung auch das Intensitätsmaximum des Laserstrahles durch den PC fortlaufend berechnet wird und dass mindestens eine einstellbare Schaltschwelle zur Überwachung des Intensitätsmaximums oder des Maximums von Intensitätspositionen vorhanden sind und dass die eventuellen Schaltausgangssignale an die Steuerung der Laserstrahlanlage zu Abschalt- oder Regelzwecken geleitet werden können.

31. Vorrichtung nach den Ansprüchen 4 bis 30, **dadurch gekennzeichnet, dass** im Gasstrom (GS) ein Sensor zur Erfassung der Gastemperatur vorhanden ist, dessen Messwerte dem Mikrocontroller zugeführt und dazu benutzt werden, die ermittelten Kenngrößen des Laserstrahles, die aufgrund des Messprinzips temperaturbeeinflusste Messwerte haben, zu korrigieren.

32. Vorrichtung nach den Ansprüchen 4 bis 30, **dadurch gekennzeichnet, dass** im Gasstrom (GS) ein Sensor zur Erfassung der Strömungsgeschwindigkeit vorhanden ist, dessen Messwerte dem Mikrocontroller zugeführt werden, der diese auf eine vorbestimmte Strömungsgeschwindigkeit mit engen Toleranzgrenzen überwacht und bei Strömungsgeschwindigkeiten außerhalb dieser Toleranzgrenzen ein Freigabesignal an die Maschinensteuerung zurücknimmt, wodurch die Laserstrahlanlage dazu veranlasst werden kann, den Laserstrahl auszuschalten.

33. Vorrichtung nach Anspruch 32, **dadurch gekennzeichnet, dass** die Messwerte der Strömungsgeschwindigkeit zusätzlich dazu benutzt werden, die Drehzahl des Ventilators (VE) zu regeln, so dass eine gleichbleibende Strömungsgeschwindigkeit sichergestellt ist.

34. Vorrichtung nach den Ansprüchen 31 bis 33, **dadurch gekennzeichnet, dass** der Sensor zur Erfassung der Temperatur und der Sensor zur Erfassung der Strömungsgeschwindigkeit des Gasstromes aus mindestens einem, zusätzlichen Widerstandsdraht besteht, der entsprechend den Widerstandsdrähten der Drahtgitterebenen ausgelegt ist und in Strömungsrichtung vor den Drahtgitterebenen mittig im Gasstrom (GS) und quer zur Strömungsrichtung positioniert ist.

35. Vorrichtung nach Anspruch 34, **dadurch gekennzeichnet, dass** der Multiplexer (MUX) über weitere zwei Schalter verfügt, wobei der eine Schalter den zusätzlichen Widerstandsdraht mit der Konstantstromquelle (IC) zur Temperaturmessung beaufschlagt und der andere Schalter den selben oder einen anderen zusätzlichen Widerstandsdraht zeitversetzt mit einem sehr hohen Strom beaufschlagt, der den Widerstandsdraht auf Temperaturen aufheizt wie sie bei den Widerstandsdrähten der Messgitterebenen vorkommen, und dass die Abweichung zwischen dem Sollwiderstand bzw. Sollspannungsabfall aufgrund des hohen Stromes und dem gemessenen Widerstand bzw. Spannungsabfall als Maß für die Strömungsgeschwindigkeit des Gasstromes (GS) genommen wird.

36. Vorrichtung nach den Ansprüchen 4 bis 35, **dadurch gekennzeichnet, dass** die Strahlengangöffnungen (LI und LO) durch mechanische Verschlüsse verschlossen sind, welche sich automatisch öffnen, sobald das Gerät in eine hierzu konstruierte Kassette im Strahlengang geschoben wird und somit die Messgitterebenen automatisch vor Verschmutzungen und Partikeln geschützt sind wenn das Gerät zu Transport oder Lagerungszwecken aus dem Strahlengang entfernt wurde.

37. Vorrichtung nach den Ansprüchen 4 bis 35, **dadurch gekennzeichnet, dass** die Strahlengangöffnungen (LI und LO) durch geeignete Fenster, welche für die Wellenlänge der zu vermessenden Laserstrahlung durchlässig sind, verschlossen werden, sodass die Messgitterebenen vor Schwebstoffen aus der Luft außerhalb des Gehäuses (OGH) oder dem Strahlengang beim geschlossenen Gehäuse (GGH) wie Staub etc. geschützt sind und die Messgenauigkeit durch eine gezieltere Führung des Gasstromes (GS) und Unterdrückung externer Luftdruckschwankungen nochmals verbessert wird.

## Claims

1. A method for measuring parameters of a laser beam (LA) extending in the z direction, such as beam length in the x and y directions, beam radius, beam diameter or ellipse semiaxes in the x and y directions of the beam, beam power, beam polarisation, via at least two wire mesh planes (DG1 to DGn) arranged one behind the other in the beam path of the laser and being skewed with respect to each other, the wire mesh planes respectively having wires (D1 to Dn) arranged side by side in their mesh planes and transverse to the beam path, said wires absorbing a small portion of the laser radiation, thereby increasing their electric resistance, the parameters of the laser beam being calculated from the increase in resistance of the wires in the mesh planes, thus turning the same into measuring mesh planes (DG1 to DGn), **characterized in that** a gas flow (GS) flows against and thereby cools said measuring meshes, the gas flowing through the measuring meshes transverse to the direction of the laser beam or parallel to the wire mesh planes (DG1 to DGn).

2. The method of claim 1, **characterized in that** the flow velocity of the gas flow (GS) is considerably higher than the flow velocity of the rising convection flow that would be caused by the hot wires without the transverse flow.

3. The method of claim 1 or 2, **characterized in that** the gas may be the ambient air and, in this case, the gas flow (GS) is an airflow (LS).

4. A device for performing the methods of one of claims 1 to 3, comprising a measuring device including the measuring meshes (DG1 to DGn) and being formed by an open, transportable housing (OGH) through which the laser beam (LA) passes via two openings (LI and LO) and thereby passes the measuring meshes transverse to the measuring mesh planes (DG1 to DGn), and a blower (VE) drawing ambient air and blowing an airflow (LS) in parallel with the measuring meshes through the open housing (OGH) of the measuring device and thus also through the measuring meshes.

5. The device of claim 4, **characterized in that**, seen in the direction of gas flow, a gas or air filter (FI) is arranged before the blower.

6. The device of claim 4 or 5, **characterized in that**, seen in the direction of airflow, a flow mesh (SG1) is arranged before the wire mesh planes that is configured such that, seen in the direction of airflow (LS), a back pressure is produced before said flow mesh, the back pressure being distributed uniformly over the surface area of the flow mesh, whereby, via the plurality of identical openings of the flow mesh, the air leaves the flow mesh with an identical mean flow velocity over the entire surface area of the flow mesh to flow towards the measuring mesh planes behind the flow mesh, thereby causing an airflow with homogenized turbulences for maximum cooling at the wire mesh planes.

7. The device of claims 4 to 6, **characterized in that**, seen in the direction of airflow, another flow mesh (SG2) is situated behind the wire or measuring mesh planes (DG1 to DGn), which is configured such that a very low back pressure is produced before this flow mesh, seen in the flow direction, whereby a very small portion of the airflow exits as a side airflow (LNS) from the two openings (LI and LO) through which the laser beam passes, in order to keep floating matter present in the air outside the housing (OGH), such as dust etc., from the measuring meshes.

8. A device for performing the methods of claim 1 or 2, comprising a measuring device including the measuring meshes (DG1 to DGn) and being formed by a closed housing (GGH) installed in the beam guiding system or tube, which housing is connected with the beam guiding system or tube (SFS) through flanges (FS) or other connecting elements, and through which the laser beam (LA) passes, thereby passing the measuring meshes transverse to the measuring mesh planes (DG1 to DGn), and a blower (VE) circulating the gas of the beam guiding system or tube (SFS) within the closed housing (GGH) of the measuring housing as a gas flow (GS), thereby blowing said gas flow in parallel with the measuring meshes through the closed housing (GGH) of the measuring device and thus also through the measuring meshes.

9. The device of claim 8, **characterized in that**, seen in the direction of airflow, a flow mesh (SG) is arranged before the wire mesh planes that is configured such that, seen in the direction of gas flow (GS), a back pressure is produced before said flow mesh, the back pressure being distributed uniformly over the surface area of the flow mesh, whereby, via the plurality of identical openings of the flow mesh, the air leaves the flow mesh with an identical mean flow velocity over the entire surface area of the flow mesh to flow towards the measuring mesh planes behind the flow mesh, thereby causing an airflow with homogenized turbulences for maximum cooling at the wire mesh planes.

10. The device of one of claims 4 to 9, **characterized in that** the measuring meshes are flown against axial to the direction of the laser beam or perpendicular to the wire mesh planes (DG1 to DGn).

11. The device of one of claims 7 to 10, **characterized in that** a gas cooler (GK) is situated in the gas flow (GS) within the closed housing (GGH) of the measuring device, said gas cooler cooling the gas flow (GS) heated at the measuring meshes (DG1 to DGn) and preferably being cooled itself using cooling water.

12. The device of claim 11, **characterized in that** the gas cooler (GK) is a Peltier element.

13. The device of one of claims 8 or 9, **characterized in that** the gas flow (GS) is directed out of the closed housing (GGH) of the measuring device into a metal pipe or hose system (MSS) and back from there into said closed housing (GGH) of the measuring device, and that the metal pipe or hose system (MSS) has a sufficiently large metal surface area size, obtained from the diameter and the length, to cool the gas flow (GS) to a sufficient extent.

14. The device of claims 8 to 13, **characterized in that** the closed housing (GGH) including the elements defining the measuring device, but at least including the measuring meshes (DG1 to DGn) and the closed gas flow (GS), is downsized to an extent that the measuring device fits in the generally known cartridge pockets for receiving lenses in laser cutting heads and may be used instead of such a lens, and thereby properly forms a closed system with the beam guiding system, and that, in such a device, the gas flow (GS) is cooled by the water-cooled inner laser cutting head metal surfaces situated around the measuring meshes (DG1 to DGn) in the area of the cartridge pocket and/or by an additional gas cooler.

15. The device of claims 4 to 14, **characterized in that** each of the wire mesh planes (DG1 to DGn) is formed by temperature-dependent identical resistance wires (D1 to Dn) situated in parallel in a plane, and that the wire mesh planes are positioned such in the laser beam (LA) that only the resistance wires D2 to D(n-1) can be located in the laser beam and the two outer resistance wires D1 and Dn are not situated in the laser beam but are shadowed by the housing GGH or OGH or by the beam guiding system (SFS), and are used as compensating wires, further being spaced by at least twice the distance from their neighboring resis-resistance wires D2 or D(n-1) than the other resistance wires among themselves.

16. The device of claim 14, **characterized in that** the two compensating wires D1 and Dn are used to correct the temperature gradient of the airflow (LS) warming up along the resistance wires D2 to D(n-1) or the wire mesh plane, and that, as the correction method, for example, the resistance difference of both compensating wires D1 and D(n) are linearly interpolated over the other resistance wires by means of a straight line and the interpolated individual values are subtracted as correction values (WK) from the measured values (WL) of the resistance wires D2 to D(n-1) for the temperature compensation thereof.

17. The device of claims 4 to 16, **characterized in that** at least one pair of wire meshes with respective compensation wires exists, the wire orientations of the two individual wire mesh planes of the pair of wire meshes always include an angle of 90° with respect to each other, and that the wire orientation of one of the two individual wire mesh planes with respect to the gas flow (GS) has an angle of attack (AW) of 45°, whereby the other wire mesh assumes an angle of 135° to the gas flow (GS), whereby both wire mesh planes are flown against uniformly.

18. The device of claim 17, **characterized in that** a further pair of wire meshes with an angle of attack (AW) of 15° and another one with an angle of attack (AW) of 75° may exist, so that, with respect to angles, three uniformly distributed pairs of wire meshes or six uniformly distributed wire mesh planes are formed, and so that all wire orientations are substantially transverse to the gas flow (GS) or the critical region, in which the wire orientations would extend almost in parallel with the gas flow (GS) (>165° to <195° or >345° to <15°) and thus hardly any cooling would be obtained, is avoided.

19. The device of claims 4 to 18, **characterized in that** the resistance wires D1 to Dn in the measuring wire mesh planes DG1 to DGn are made of non-oxidizing, high-temperature resistant and, with respect to the electric resistance, linearly temperature-dependant material, primarily of platinum.

20. The device of claim 19, **characterized in that** the resistance wires D1 to Dn in the measuring wire mesh planes DG1 to DGn have a diameter of less than 15 micrometers.

21. The device of claims 4 to 20, **characterized in that** the resistance wires D1 to Dn in each of the measuring wire mesh planes DG1 to DGn are individual wires which all individually and sequentially form a multiplexer (MUX) via analogue switches S1 to Sn in each of the measuring wire mesh planes DG1 to DGn, which multiplexer momentarily supplies current from a single constant current source (IC) sequentially to the analogue switches and, in the meantime, the voltage drop caused by the temperature-dependent resistance of the individual wire is detected by a single amplifier (AMP) and picked-up by a microcontroller (MC) via a single A/D converter (ADC), which microcontroller in turn controls the multiplexer (MUX) to drive the analogue switches (S1 to Sn) and thereby detects the resistance values as proportional voltage drop measurement values of the individual wires D1 to Dn in each of the measuring wire mesh planes DG1 to DGn.

22. The device of claim 21, **characterized in that** fast electronic components of the type mentioned and fast software are used for evaluation in the microcontroller (MC) which allow to detect the voltage drop measurement values of all resistance wires D1 to Dn in all wire mesh planes DG1 to DGn in less than a total of 10 milliseconds per wire mesh plane and to simultaneously calculate therefrom at least the parameters of the laser beam, the beam position in the x and y directions, the beam radius or diameter or the ellipse semiaxes in the x and y directions of the beam.

23. The device of claim 22 **characterized in that** a corresponding measuring device comprises calibrating factors regarding a beam power to be measured and is thus adapted to calculate the beam power alone or in addition to the already detected parameters of the laser beam.

24. The device of claims 22 or 23, **characterized in that**, using only two wire mesh planes or a wire mesh pair, a corresponding measuring device is already adapted to detect the beam parameters mentioned with sufficient accuracy.

25. The device of claims 22 to 23, **characterized in that**, using only two wire mesh planes or a wire mesh pair, a corresponding measuring device is already adapted to calculate the laser beam parameter of polarisation contrast alone or in addition to the parameters of the laser beam already detected.

26. The device of claims 4 to 23, **characterized in that** a corresponding measuring device with six wire mesh planes DG1 to DG6 or three wire mesh pairs additionally detects the laser beam parameters of polarisation elipticity and azimuth in the x and y directions of the beam and that this measurement also occurs within the overall cycle period of the device of less than 60 milliseconds (6 x 10 milliseconds per wire mesh).

27. The device of claims 22 to 26, **characterized in that** a corresponding measuring device for at least one of the measurable parameters of the laser beam has at least one adjustable switching threshold to monitor at least one beam parameter, and that the possible switching output signals may be transmitted to the control of the laser beam installation for switch-off or regulation purposes.

28. The device of claims 4 to 27, **characterized in that** a corresponding measuring device may additionally include a personal computer (PC) via which the measuring device can be parameterized, calibrated or operated and which may also be used to read out, store or further process the measured values.

29. The device of claims 22 to 28, **characterized in that** a corresponding measuring device additionally includes a personal computer (PC) which reads out the raw measured data of six wire mesh planes DR1 to DR6 besides the calculations of parameters of the laser beam in the measuring device, and calculates a representation of the intensity distribution on the monitor of the PC so fast that the same is represented at a refresh rate of 8 Hz.

30. The device of claim 29, **characterized in that** the PC also continuously calculates the intensity maximum of the laser beam from the intensity distribution, and that at least one adjustable switching threshold is provided to monitor the intensity maximum or the maximum of intensity positions, and that the possible switching output signals may be transmitted to the control of the laser beam installation for switch-off or regulation purposes.

31. The device of claims 4 to 30, **characterized in that** a sensor for detecting the gas temperature is provided in the gas flow (GS), whose measured values are fed to the microcontroller and are used to correct the detected parameters of the laser beam which, due to the measuring principle, show measured values influenced by temperature.

32. The device of claims 4 to 30, **characterized in that** a sensor for detecting the gas temperature is provided in the gas flow (GS), whose measured values are fed to the microcontroller that monitors these values for a predetermined flow velocity applying narrow tolerances and, for flow velocities outside these tolerances, cancels an enable signal the machine control, whereby the laser beam installation may be caused to switch off the laser beam.

33. The device of claim 32, **characterized in that** the measured values of the flow velocity are used in addition to regulate the speed of the blower (VE) so that a constant flow velocity is guaranteed.

34. The device of claims 31 to 33, **characterized in that** the sensor for detecting the temperature and the sensor the flow velocity of the gas flow are formed by at least one additional resistance wire configured in accordance with the resistance wires of the wire mesh planes and positioned centrally in the gas flow (GS) before the wire mesh planes, seen in the flow direction, and transverse to the flow direction.

35. The device of claim 34, **characterized in that** the multiplexer (MUX) comprises two further switches, one switch feeding the additional resistance wire from the constant current source (IC) for temperature measurement, whereas the other switch applies a very high current to the same or another additional resistance wire in a delayed manner which heats the resistance wire to temperatures occurring with the resistance wires of measuring mesh planes, and that the deviation between the set resistance or set voltage drop due to the high current and the measured resistance or voltage drop is used as the measure for the flow velocity of the gas flow (GS).

36. The device of claims 4 to 35, **characterized in that** the beam path openings (LI and LO) are closed with mechanical closures that open automatically as soon as the device is pushed into a cartridge constructed for this purpose in the beam path, whereby the measuring mesh planes are automatically protected against contamination and particles when the device has been removed from the beam path for transport or storage purposes.

37. The device of one of claims 4 to 35, **characterized in that** the beam path openings (LI and LO) are closed with suitable windows, transparent to the wavelength of the laser radiation to be measured, so that the measuring mesh planes are protected against floating matter from the air outside the housing (OGH) or, for the closed housing (GGH), the beam path, such as dust etc., and the measurement accuracy is further improved by a better directed guiding of the gas flow (GS) and a better suppression of external variations in the air pressure.

## Revendications

1. Procédé de mesurage de paramètres d'un rayon laser (LA) orienté dans la direction z, les paramètres comprenant la position du rayon dans les directions x et z, le radius du rayon, le diamètre du rayon ou les demi-axes de l'ellipse dans es direction x et y du rayon, la puissance du rayon, la polarisation du rayon, le mesurage s'effectuant par au moins deux plans de grilles de fils (DG1 à DGn) disposées l'une après l'autre dans le trajectoire du rayon et tournées l'une par rapport à l'autre, chacune comprenant des fils (D1 à Dn) disposés côte à côte dans leurs plans de grilles et transversalement au trajectoire du rayon, lesdits fils absorbant une petite partie du rayonnement laser et, par cela, augmentant leur résistance électrique, les paramètres du rayon laser étant calculés de l'augmentation de résistance des fils des plans de grilles les mêmes alors devenant des plans de grilles de mesurage (DG1 à DGn), **caractérisé en ce que** les grilles de mesurage sont affluées et refroidies par un courant de gaz (GS), le gaz passant à travers les grilles de mesurage transversalement à la direction du rayon laser ou parallèlement aux plans de grilles de fils (DG1 à DGn).

2. Procédé selon la revendication 1, **caractérisé en ce que** la vélocité du courant de gaz (GS) est nettement plus grande que la vitesse du courant de convection ascendant qui serait produit à cause des fils chauds sans courant transversal.

3. Procédé selon la revendication 1 ou 2, **caractérisé en ce que** le gaz peut être de l'air ambiant et, dans ce cas, le courant de gaz (GS) est un courant d'air (LS).

4. Dispositif pour mettre en oeuvre les procédés selon les revendications 1 à 3, comprenant un dispositif de mesurage, dans lequel sont prévues les grilles de mesurage (DG1 à DGn) et qui est formé par un boîtier ouvert transportable (OGH) à travers lequel passe le rayon laser (LA) par deux ouvertures (LI et LO), le rayon laser passant les grillages de mesurage transversalement aux plans de grilles de fils (Dg1 à DGn), et un ventilateur (VE) aspirant l'air ambiant et soufflant un courant d'air (LS) à travers le boîtier ouvert (OGH) du dispositif de mesurage en parallèle aux plans de grilles de mesurage et, par cela, aussi à travers les grilles de mesurage.

5. Dispositif selon la revendication 4, **caractérisé en ce qu'** un filtre à air ou à gaz (FI) est disposé avant le ventilateur, vu dans la direction d'écoulement du gaz.

6. Dispositif selon la revendication 4 ou 5, **caractérisé en ce qu'**une grille d'écoulement (SG1) est positionnée avant les plans de grilles de fils, vu dans la direction d'écoulement d'air, qui est configurée de sorte qu'une pression dynamique est formée devant cette grille d'écoulement, vu dans la direction d'écoulement d'air (LS), la pression étant distribuée également sur la surface de la grille d'écoulement, l'air échappant de la grille d'écoulement vers les plans de grilles de mesurage à travers les plusieurs ouvertures identiques dans la grille d'écoulement, la vitesse d'écoulement moyenne derrière la grille d'écoulement étant identique sur toute la surface de la grille d'écoulement, et, par cela, un courant d'air avec des turbulences homogénéisées est formé pour le refroidissement maximal aux plans de grilles de fils.

7. Dispositif selon les revendications 4 à 6, **caractérisé en ce qu'**une autre grille d'écoulement (SG2) est située derrière les plans de grilles de fils ou de mesurage (DG1 à DGn), vu dans la direction d'écoulement d'air, qui est configurée de sorte qu'une pression dynamique très basse est formée avant cette grille d'écoulement, vu dans la direction d'écoulement, alors qu'une très petite partie du courant d'air échappe par les deux ouvertures (LI et LO), par lesquelles passe le rayon laser, comme courant d'air dérivé (LNS), afin de tenir à l'écart des grilles de mesurage des matières suspendues en l'air, présentes à l'extérieur du boîtier (OGH), telle que la poussière etc.

8. Dispositif pour la mise en oeuvre des procédés selon les revendications 1 ou 2, comprenant un dispositif de mesurage dans lequel sont arrangées les grilles de mesurage (DG1 à DGn), et qui est constitué par un boîtier fermé (GGH) installé dans le système de guidage du rayon ou le tube de guidage du rayon, le boîtier étant rigidement raccordé au système ou tube de guidage du rayon (SFS) par des brides (FS) ou des autres éléments de raccord et par lesquels passe le rayon laser (LA) qui traverse les grilles de mesurage transversalement aux plans des grille de mesurage (DG1 à DGn), et comprenant un ventilateur (VE) refoulant comme un courant de gaz (GS) le gaz du système ou du tube de guidage du rayon (SFS) dans le boîtier fermé (GGH) du dispositif de mesurage et soufflant le gaz en parallèle aux plans de grilles de mesurage à travers le boîtier fermé (GGH) du dispositif de mesurage et, par cela, à travers les grilles de mesurage.

9. Dispositif selon la revendication 8, **caractérisé en ce qu'**une grille d'écoulement (SG) est positionnée avant les plans de grilles de fils, vu dans la direction d'écoulement d'air, qui est configurée de sorte qu'une pression dynamique est formée devant cette grille d'écoulement, vu dans la direction d'écoulement de gaz (GS), la pression étant distribuée également sur la surface de la grille d'écoulement, le gaz échappant de la grille d'écoulement vers les plans de grilles de mesurage à travers les plusieurs ouvertures identiques dans la grille d'écoulement, la vitesse d'écoulement moyenne derrière la grille d'écoulement étant identique sur toute la surface de la grille d'écoulement, et, par cela, un courant d'air avec des turbulences homogénéisées est formé pour le refroidissement maximal aux plans de grilles de fils.

10. Dispositif selon l'une des revendications 4 à 9, **caractérisé en ce que** les grilles de mesurage sont affluées axialement par rapport à la direction du rayon laser ou verticalement par rapport aux plans de grilles de fils (DG1 à DGn).

11. Dispositif selon l'une des revendications 7 à 10, **caractérisé en ce qu'**un refroidisseur à gaz (GK) est situé au sein du boîtier fermé (GGH) du dispositif de mesurage dans le courant de gaz (GS), refroidissant le courant de gaz (GS) chauffé dans la région des grilles de mesurage (DG1 à DGn) et étant lui-même préférentiellement refroidie par de l'eau de refroidissement.

12. Dispositif selon la revendication 11, **caractérisé en ce que** le refroidisseur à gaz (GK) est un élément Peltier.

13. Dispositif selon l'une des revendications 8 ou 9, **caractérisé en ce que** le courant de gaz (GS) est dirigé hors le boîtier fermé (GGH) du dispositif de mesurage dans un système de tubes ou de tuyaux métallique (MSS) et retourné du système dans le boîtier fermé (GGH) du dispositif de mesurage, et que ledit système de tubes ou de tuyaux métallique (MSS) présente une surface métallique suffisante, obtenue par le diamètre et la longueur, pour refroidir suffisamment le courant de gaz (GS).

14. Dispositif selon les revendications 8 à 13, **caractérisé en ce que** le boîtier fermé (GGH) avec les éléments définissant le dispositif de mesurage, mais au moins avec les grilles de mesurage (DG1 à DGn) et le courant de gaz (GS) fermé, est réduit jusqu'à le dispositif de mesurage est à la mesure pour être inséré dans les poches de cassette bien connues pour recevoir des lentilles dans des têtes de découpage à laser et pour remplacer une telle lentille, et que ledit boîtier forme ainsi un système fermé avec le système de guidage du rayon, et que dans un tel dispositif, le refroidissement du courant de gaz (GS) est réalisé par les surfaces métalliques du tête de découpage à laser, situées autour des grilles de mesurage (DG1 à DGn) et à l'intérieur, dans la région de la poche de cassette ou/et par un refroidisseur à gaz additionnel.

15. Dispositif selon les revendications 4 à 14, **caractérisé en ce que** chaque plan des grilles de fils (DG1 à DGn) est formé par des fils de résistance (D1 à Dn) identiques, qui sont dépendants de la température et situés en parallèle dans un plan, et que les plans de grilles de fils sont positionnés dans le rayon laser (LA) de sorte que seuls les fils de résistance D2 à D(n-1) peuvent être situés dans le rayon laser et les deux fils de résistance extérieurs D1 et Dn ne sont pas situés dans le rayon laser, mais sont séparés du boîtier GGH ou OGH ou du système de guidage du rayon (SFS) et sont utilisés comme fils de compensation, ces fils étant écartés de leurs fils de résistance D1 ou D(n-1) adjacents par au moins deux fois la distance entre les autres fils de résistance.

16. Dispositif selon la revendication 14, **caractérisé en ce que** les deux fils de compensation D1 et Dn sont utilisés pour corriger le gradient de température du courant d'air (LS) se chauffant le long les fils de résistance D2 à D(n-1) ou le plan de grille de fils, et que, comme méthode de correction, l'on apporte une interpolation linéaire à la différence de résistance des deux fils de compensation D1 et D(n) par rapport aux autres fils de résistance, utilisant une ligne droite, et l'on déduit, comme valeurs de correction (WK), les valeurs individuelles interpolées des valeurs mesurées (WL) des fils de résistance D2 à D(n-1) dans le but de la compensation de température desdits fils.

17. Dispositif selon les revendications 4 à 16, **caractérisé en ce qu'**il existe au moins une paire de grilles de fils avec des fils de compensation respectifs, les orientations des fils des deux plans de grilles de fils individuels de la paire de grilles de fils toujours étant dans un angle de 90° l'une par rapport à l'autre, et que l'orientation de l'un des deux plans de grilles de fils individuels présente un angle d'inclinaison (AW) de 45° par rapport au courant de gaz (GS), l'autre grille de fils ainsi étant inclinée sous un angle de 135° par rapport au courant gaz (GS), et que, par cela, les deux plans de grilles de fils sont afflués également.

18. Dispositif selon la revendication 17, **caractérisé en ce qu'**une autre paire de grilles de fils sous un angle d'inclinaison (AW) de 15° et encore une autre sous un angle d'inclinaison (AW) de 75° peuvent exister, de sorte que, par rapport aux angles, trois paires de grilles de fils distribuées régulièrement ou six plans de grilles distribués régulièrement sont formés et toutes les orientations des fils sont orientées sensiblement transversalement au courant de gaz (GS) ou, respectivement, la région critique est évitée, dans laquelle les fils seraient presque en parallèle au courant de gaz (GS) (>165° à <195° ou >345° à <15°) et, pour cette raison, on n'obtiendrai guère de refroidissement.

19. Dispositif selon les revendications 4 à 18, **caractérisé en ce que** les fils de résistance D1 à Dn dans les plans de grilles de fils de mesurage DG1 à DGn sont formés d'un matériau non-oxydant, résistant à des températures élevées et dont la résistance électrique est linéairement dépendante de la température, ce matériau étant le platine, de préférence.

20. Dispositif selon la revendication 19, **caractérisé en ce que** les fils de résistance D1 à Dn dans les plans de grilles de fils de mesurage DG1 à DGn ont un diamètre inférieur à 15 micromètres.

21. Dispositif selon les revendications 4 à 20, **caractérisé en ce que** les fils de résistance D1 à Dn dans chaque plan des grilles de fils de mesurage DG1 à DGn sont des fils individuels formant tous individuellement et successivement un multiplexeur (MUX) dans chaque plan des grilles de fils de mesurage DG1 à DGn par des actionneurs analogiques S1 à Sn, ledit multiplexeur temporairement et successivement appliquant de courant, venant d'une seule source de courant constant (IC), aux actionneurs analogiques, et, pendant ce temps, la chute de tension, se produisant à cause de la résistance dépendante de la température d'un seul fil de résistance, est détectée par un seul amplificateur (AMP) et est reçue par un microcontrôleur (MC) à travers un seul convertisseur analogique-numérique (ADC), le microcontrôleur commandant le multiplexeur (MUX) pour commander les actionneurs analogiques (S1 à Sn) et, de cette façon, détectant les valeurs de résistance comme valeurs mesurées de la chute de tension proportionnelles des fils individuels D1 à Dn dans chaque plan des grilles de fils de mesurage DG1 à DGn.

22. Dispositif selon la revendication 21, **caractérisé en ce que** l'on utilise des éléments électroniques vites du type mentionné et des logiciels vites pour l'exploitation dans le microcontrôleur (MC), qui permettent de détecter les valeurs mesurées de la chute de tension des fils individuels D1 à Dn dans chaque plan des grilles de fils de mesurage DG1 à DGn en moins de 10 millisecondes en tout par plan de grilles de fils et d'en calculer en même temps au moins les paramètres du rayon laser, la position du rayon dans les directions x et y, le radius du rayon ou le diamètre du rayon ou les demi-axes de l'ellipse dans les directions x et y du rayon.

23. Dispositif selon la revendication 22, **caractérisé en ce qu'**un dispositif de mesurage correspondant comprend des facteurs de calibrage relatifs à une puissance de rayon à mesurer, le dispositif ainsi étant apte à calculer la puissance du rayon seule ou additionnellement aux paramètres du rayon laser déjà détectés.

24. Dispositif selon les revendications 22 ou 23, **caractérisé en ce qu'**un dispositif de mesurage correspondant détecte les paramètres du rayon mentionnés avec une précision suffisante n'utilisant que deux plans de grilles de fils ou une paire de grilles de fils.

25. Dispositif selon les revendications 22 à 23, **caractérisé en ce qu'**un dispositif de mesurage correspondant calcule un paramètre du rayon laser, à savoir le contraste de polarisation, seul ou additionnellement aux paramètres du rayon laser déjà détectés, n'utilisant que deux plans de grilles de fils ou une paire de grilles de fils.

26. Dispositif selon les revendications 4 à 23, **caractérisé en ce qu'**un dispositif de mesurage correspondant comprenant six plans de grilles de fils DG1 à DG6 ou trois paires de grilles de fils détecte en outre des paramètres du rayon laser, qui sont l'ellipticité de polarisation et l'azimut dans les directions x et y du rayon, et que ce mesurage est aussi fait dans le temps de cycle total du dispositif de moins que 60 millisecondes (6 x 10 millisecondes par grille de fils).

27. Dispositif selon les revendications 22 à 26, **caractérisé en ce qu'**un dispositif de mesurage correspondant comprend, pour au moins un des paramètres mesurables du rayon laser, au moins un seuil automatique pour surveiller au moins un paramètre, et que les signaux de commutation de sortie possibles peuvent être transmis à la commande de l'installation de rayon laser dans le but de désactivation ou de régulation.

28. Dispositif selon les revendications 4 à 27, **caractérisé en ce qu'**un dispositif de mesurage correspondant peut en outre comprendre un ordinateur (PC) lequel le dispositif de mesurage peut être paramètrisé, calibré ou opéré, et qui peut aussi fonctionner à lire, stocker ou traiter les valeurs mesurées.

29. Dispositif selon les revendications 22 à 28, **caractérisé en ce qu'**un dispositif de mesurage correspondant en outre comprend un ordinateur (PC) lisant les données de mesurage brutes de six plans de grilles de fils DR1 à DR6 outre les calculs de paramètres due rayon laser dans le dispositif de mesurage et calculant une représentation de la distribution de l'intensité sur l'écran du PC si vite qu'elle est présentée avec au moins une fréquence de rafraîchissement de 8 Hz.

30. Dispositif selon la revendication 29, **caractérisé en ce que** l'on calcule, en continu, de la distribution de l'intensité aussi le maximum de l'intensité du rayon laser, utilisant l'ordinateur, est qu'au moins un seuil automatique ajustable pour surveiller le maximum de l'intensité ou le maximum de positions de l'intensité sont prévus, et que les signaux de commutation de sortie possibles peuvent être transmis à la commande de l'installation de rayon laser dans le but de désactivation ou de régulation.

31. Dispositif selon les revendications 4 à 30, **caractérisé en ce qu'**un capteur est présent dans le courant de gaz (GS) pour détecter la température du gaz, les valeurs mesurées du capteur étant transmises au microcontrôleur et étant utilisées pour corriger les paramètres détectés du rayon laser qui, à cause du principe de mesurage, ont des valeurs mesurées influencées par la température.

32. Dispositif selon les revendications 4 à 30, **caractérisé en ce qu'**un capteur est prévu dans le courant de gaz (GS) pour détecter la vitesse d'écoulement, dont les valeurs mesurées sont transmises au microcontrôleur surveillant lesdites valeurs pour une vitesse d'écoulement déterminée, appliquant des limites de tolérance très étroites, et qui, en cas de vitesses d'écoulement hors desdites limites de tolérance, retire un signal de libération à la commande de la machine, ainsi instruisant l'installation de rayon laser de désactiver le rayon laser, le cas échéant.

33. Dispositif selon la revendication 32, **caractérisé en ce que** les valeurs mesurées de la vitesse d'écoulement sont additionnellement utilisées pour réguler la vitesse du ventilateur (VE) afin d'assurer une vitesse d'écoulement constante.

34. Dispositif selon les revendications 31 à 33, **caractérisé en ce que** le capteur pour détecter la température et le capteur pour détecter la vitesse d'écoulement du courant de gaz sont chacun formés par au moins fil de résistance additionnel configuré conformément aux fils de résistance des plans de grilles de fils et qui est positionné avant les plans de grilles de fils, vu dans la direction d'écoulement, et dans le centre du courant de gaz (GS) et transversalement à la direction d'écoulement.

35. Dispositif selon la revendication 34, **caractérisé en ce que** le multiplexeur (MUX) comprend deux actionneurs de plus, un des actionneurs appliquant la source de courant constant (IC) au fil de résistance additionnel pour mesurer la température, et l'autre actionneur appliquant en différé un courant très élevé au même ou à un autre fil de résistance additionnel qui chauffe le fil de résistance à des températures qu'on trouve chez le fils de résistance des plans de grilles de mesurage, et que la différence entre la résistance de consigne ou la chute de tension de consigne causée par le courant élevé et la résistance mesurée ou la chute de tension mesurée est utilisée comme la mesure de la vitesse d'écoulement du courant de gaz (GS).

36. Dispositif selon les revendications 4 à 35, **caractérisé en ce que** les ouvertures du trajectoire du rayon (LI et LO) sont fermées par des obturateurs mécaniques ouvrant automatiquement dès que l'appareil est inséré dans une cassette, spécialement construite, dans le trajectoire du rayon, et, par cela, les plans de grilles de mesurage sont automatiquement protégés contre contaminations et particules quand l'appareil est prélevé du trajectoire du rayon dans le but de transport ou stockage.

37. Dispositif selon les revendications 4 à 35, **caractérisé en ce que** les ouvertures du trajectoire du rayon (LI et LO) sont fermées par des fenêtres appropriées transparentes à la longueur d'onde du rayonnement laser, de manière que les plans de grilles de fils sont protégés contre des matières suspendues en l'air en dehors le boîtier (OGH) ou le trajectoire en cas du boîtier fermé (GGH), comme la poussière etc., et que la précision de mesurage est encore améliorée par un guidage plus ciblé du courant de gaz (GS) et par la suppression de variations de la pression de l'air externes.
